# EUROPEAN PATENT APPLICATION

(11) **EP 4 600 295 A1**
(43) Date of publication of application: **13.08.2025**
(21) Application number: 23874911.3
(22) Date of filing: 04.10.2023
(51) Int. Cl.: C08J 11/12, C08J 11/16

(54) **METHOD FOR MANUFACTURING RECYCLED REINFORCING FIBERS**

(30) Priority: 06.10.2022 JP 2022161820
(71) Applicant: Miraikasei Inc., Chikuma-shi, Nagano, 387-0001 (JP)
(72) Inventor: MARUKO, Haruna, Chikuma-shi, Nagano 387-0001 (JP); KAKEHATA, Yasunari, Chikuma-shi, Nagano 387-0001 (JP); KUDO, Masaaki, Chikuma-shi, Nagano 387-0001 (JP)
(74) Representative: Winter, Brandl - Partnerschaft mbB
(86) International application number: PCT/JP2023/036252
(87) International publication number: WO 2024/075786

(57) **Abstract**

Provided is a method of producing recycled reinforcing fibers, which can efficiently recover reinforcing fibers from a fiber-reinforced resin material under relatively mild conditions. A method of producing recycled reinforcing fibers, the method comprising: a first step of treating a fiber-reinforced resin material comprising a resin and reinforcing fibers with a treatment solution to dissolve at least part of the resin of the fiber-reinforced resin material in the treatment solution; and a second step of heating the fiber-reinforced resin material in a gas atmosphere at 150°C or higher.

## Description

### [Cross Reference to Related Applications]

The present application is based on and claims the benefit of priority from Japanese Patent Application No. 2022-161820, filed October 6, 2022 in Japan, the content of which is incorporated herein by reference.

### [Technical Field]

The present invention relates to a method of producing recycled reinforcing fibers.

### [Background Art]

Fiber-reinforced plastics (FRP) using fibers such as glass fibers as a reinforcing material are lightweight, high strength and high elasticity materials, and are widely used for members of small ships, automobiles, railway vehicles, and the like. In addition, carbon fiber-reinforced plastics (CFRP) using carbon fibers as a reinforcing material have been developed for further reducing weight, increasing strength and increasing elasticity, and are used for members of aircraft, automobiles, and the like.

In recent years, the amount of fiber-reinforced plastic waste has tended to increase, and the development of recycling technology is being studied. Methods for recovering reinforcing fibers from fiber-reinforced plastics mainly comprise a pyrolysis method, in which a resin component is thermally decomposed and removed by heat treatment to thereby recover reinforcing fibers, and a solvent method, in which a resin component is dissolved in a solvent and removed to thereby recover reinforcing fibers. Among these methods, the solvent method is advantageous from the viewpoint of resource recycling since the resin component can be easily recovered.

Examples of the pyrolysis method include a method of producing recycled carbon fiber bundles disclosed in PTL 1, which is a method of obtaining pieces of carbon fiber base material as recycled carbon fiber bundles from a carbon fiber-reinforced resin comprising a plurality of laminated chip- or sheet-like pieces of carbon fiber base material and a matrix resin, the method comprising: heating the carbon fiber-reinforced resin at 300°C to 700°C to pyrolyze the matrix resin to thereby obtain a heat-treated product; and crushing the heat-treated product in a direction in which the plurality of laminated chip- or sheet-like pieces of carbon fiber base material are separated from each other to separate the plurality of chip- or sheet-like pieces of carbon fiber base material while maintaining their chip- or sheet-like form to thereby obtain chip- or sheet-like recycled carbon fiber bundles.

Examples of the solvent method include those proposed in PTLs 2 and 3. PTL 2 proposes a method of producing carbon fibers comprising: a step of immersing a carbon fiber composite material in an acidic aqueous solution to elute at least part of a resin component of the carbon fiber composite material to obtain a substantially fibrous material; and a step of immersing the substantially fibrous material in an alkaline aqueous solution to elute at least part of the resin component of the substantially fibrous material to obtain a fibrous material. Further, PTL 3 proposes a method of recovering carbon fibers comprising: a step of dissolving a base material of a carbon fiber-reinforced plastic material using a solution comprising phosphoric acid, wherein the solution has a phosphoric acid concentration of 110 mass% or greater, and the step of dissolving is performed at a solution temperature of 200°C or higher and 300°C or lower.

### [Citation List]

### [Patent Literature]

PTL 1: WO 2018/212016
PTL 2: JP 2019-136932 A
PTL 3: JP 2020-50704 A

### [Summary of Invention]

### [Technical Problem]

However, in the conventional pyrolysis methods, the reinforcing fiber resin material is heated to a relatively high temperature, which may damage the reinforcing fibers themselves to be recovered.

In addition, in the conventional solvent methods, the efficiency of removing the resin component is not sufficiently high. For example, according to the methods described in PTLs 1 and 2, the resin component is removed after the fiber-reinforced resin material is finely cut into chips of about several centimeters, in consideration of permeation of the treatment solution comprising a solvent. When the fiber-reinforced resin material is finely cut as described above, the length of the recycled reinforcing fibers recovered from the fiber-reinforced resin material is inevitably shortened, whereby it becomes difficult to maintain the performance of the reinforcing fibers contained in the fiber-reinforced resin material as it was before recovery and the applications of the recovered reinforcing fibers are limited. On the other hand, in order to efficiently remove the resin component by the solvent method, it is required to perform treatment for a long period of time under severe conditions such as high temperature.

Therefore, the present invention has been made to provide a method of producing recycled reinforcing fibers, which can efficiently recover reinforcing fibers from a fiber-reinforced resin material under relatively mild conditions.

### [Solution to Problem]

The inventors of the present invention have studied the recovery of reinforcing fibers from a fiber-reinforced resin material, and found that a resin can be efficiently removed from a fiber-reinforced material under relatively mild conditions by combining a solvent method and a pyrolysis method. Then, the inventors of the present invention conducted further studies based on the above findings, and arrived at the present invention.

The gist of the present invention is as follows.
(1) A method of producing recycled reinforcing fibers, the method comprising:
   a first step of treating a fiber-reinforced resin material comprising a resin and reinforcing fibers with a treatment solution to dissolve at least part of the resin of the fiber-reinforced resin material in the treatment solution; and
   a second step of heating the fiber-reinforced resin material in a gas atmosphere at 150°C or higher.
(2) The method of producing recycled reinforcing fibers according to (1), wherein the first step comprises treating the fiber-reinforced resin material with an oxidation treatment solution comprising an oxidant to dissolve at least part of the resin of the fiber-reinforced resin material in the oxidation treatment solution.
(3) The method of producing recycled reinforcing fibers according to (1), wherein the first step comprises a first treatment in which the fiber-reinforced resin material is treated with an acidic solution comprising an acid and a second treatment in which the fiber-reinforced resin material is treated with an oxidation treatment solution comprising an oxidant to dissolve at least part of the resin of the fiber-reinforced resin material in the oxidation treatment solution.
(4) The method of producing recycled reinforcing fibers according to (2) or (3), wherein the oxidant comprises an acid having oxidizing properties.
(5) The method of producing recycled reinforcing fibers according to (4), wherein the acid having oxidizing properties comprises at least one selected from the group consisting of nitric acid, a mixed acid of sulfuric acid and nitric acid, a mixed acid of nitric acid and hydrochloric acid (aqua regia), and a mixed solution of hydrogen peroxide and sulfuric acid.
(6) The method of producing recycled reinforcing fibers according to any one of (2) to (5), wherein the oxidation treatment solution further comprises a polymerization inhibitor.
(7) The method of producing recycled reinforcing fibers according to (6), wherein the polymerization inhibitor comprises at least one selected from the group consisting of nitrites and nitrite esters.
(8) The method of producing recycled reinforcing fibers according to any one of (3), wherein the acid comprises at least one selected from the group consisting of sulfuric acid, hydrochloric acid, phosphoric acid and acetic acid.
(9) The method of producing recycled reinforcing fibers according to (3) or (8), wherein the acid in the acidic solution has a concentration of 0.5 mol/L or greater.
(10) The method of producing recycled reinforcing fibers according to any one of (1) to (9), wherein in the second step, the fiber-reinforced resin material is heated in a gas atmosphere at 150°C or higher and 350°C or lower.
(11) The method of producing recycled reinforcing fibers according to any one of (1) to (10), wherein in the second step, heating is performed for 60 minutes or more and 300 minutes or less.
(12) The method of producing recycled reinforcing fibers according to any one of (1) to (11), wherein the resin comprises an epoxy resin.
(13) The method of producing recycled reinforcing fibers according to any one of (1) to (12), wherein the resin comprises an amine-cured epoxy resin.
(14) The method of producing recycled reinforcing fibers according to any one of (1) to (13), wherein the reinforcing fibers comprise carbon fibers.

### [Advantageous Effects of Invention]

With the above configuration, the present invention aims to provide a method of producing recycled reinforcing fibers, which can efficiently recover reinforcing fibers from a fiber-reinforced resin material under relatively mild conditions.

### [Description of Embodiments]

Some examples of a method of producing recycled reinforcing fibers according to a preferred embodiment of the present invention will be described below.

### 1. First Embodiment

Next, a method of producing recycled reinforcing fibers according to a first embodiment of the present invention will be described. First, a method of producing recycled reinforcing fibers according to the present invention comprises: a first step of treating a fiber-reinforced resin material comprising a resin and reinforcing fibers with a treatment solution to dissolve at least part of the resin of the fiber-reinforced resin material in the treatment solution; and a second step of heating the fiber-reinforced resin material in a gas atmosphere at 150°C or higher.

Further, in the method of producing recycled reinforcing fibers according to the present embodiment, the first step in the method of producing recycled reinforcing fibers according to the present embodiment comprises a first treatment in which the fiber-reinforced resin material is treated with an acidic solution comprising an acid and a second treatment in which the fiber-reinforced resin material is treated with the oxidation treatment solution comprising an oxidant to dissolve at least part of the resin of the fiber-reinforced resin material in the oxidation treatment solution. Furthermore, the method of producing recycled reinforcing fibers according to the present embodiment comprises a step (preparation step) of preparing a fiber-reinforced resin material prior to the first step and the second step. The term "the resin dissolves" as used herein means not only that the resin itself directly dissolves in the treatment solution, but also that the resin decomposes to produce a reaction product, and the reaction product dissolves in the treatment solution. In the following description, each step in the method of producing recycled reinforcing fibers according to the present embodiment will be described.

### 1.1. Preparation Step

First, prior to the first step, a fiber-reinforced resin material is prepared. The fiber-reinforced resin material is a resin material reinforced by reinforcing fibers embedded in a matrix resin (also simply referred to as a "resin"). Examples of the fiber-reinforced resin material include, but are not limited to, carbon fiber-reinforced plastics (CFRP), glass fiber-reinforced plastics (GFRP), glass-mat-reinforced thermoplastics (GMT), aramid-fiber-reinforced plastics (AFRP), Kevlar fiber-reinforced plastics (KFRP), Dyneema fiber-reinforced plastics (DFRP), basalt fiber-reinforced plastics, boron fiber-reinforced plastics, and prepregs thereof. Among these, a relatively large amount of carbon fiber-reinforced plastics is used and a large amount of energy is consumed in production of carbon fibers, so it is desired to recover carbon fibers from the used carbon fiber-reinforced plastics and/or prepregs thereof and reuse them.

In addition, the reinforcing fibers in the fiber-reinforced resin material may be in the form of fiber bundles (tows) in which a plurality of reinforcing fibers are aligned in one direction, or in the form of a woven fabric or a non-woven fabric in which fiber bundles of reinforcing fibers are used as warp and weft, or the reinforcing fibers may be arranged at random positions and orientations. Further, the reinforcing fibers may be in the form of chips, and examples thereof include chopped fibers obtained by cutting fiber bundles, chips of a woven fabric, and the like.

The resin in the fiber-reinforced resin material is not particularly limited, and may be, for example, either a thermosetting resin or a thermoplastic resin. The thermosetting resin may be uncured or may be a cured product.

Examples of the thermosetting resin include, but are not limited to, epoxy resins, unsaturated polyester resins, vinyl ester resins, phenol resins, cyanate resins, polycarbonate resins and polyacetal resins, and these can be used alone or in combination of two or more.

Examples of the thermoplastic resin include, but are not limited to, polyolefins, polyesters, polycarbonates, acrylic resins, acrylonitrile-butadiene-styrene copolymers, polyether ketones and polyphenylene sulfides, and these can be used alone or in combination of two or more.

Further, the resin constituting the fiber-reinforced resin material preferably comprises an epoxy resin. The epoxy resin is efficiently decomposed and can dissolve in a treatment solution in an oxidation step using a polymerization inhibitor, which will be described later.

Examples of the epoxy resin having a phenol skeleton include, but are not limited to, bisphenol-A epoxy resins, bisphenol-F epoxy resins, novolac epoxy resins and aliphatic epoxy resins, and these can be used alone or in combination of two or more.

The content of the epoxy resin in the resin in the fiber-reinforced resin material is not particularly limited, but may be, for example, 50 mass% or greater, preferably 70 mass% or greater, and more preferably 80 mass% or greater. Still more preferably, the resin is substantially composed of an epoxy resin, and most preferably, the resin is composed of an epoxy resin. Accordingly, removal of the resin and recovery of the reinforcing fibers from the fiber-reinforced resin material during the oxidation step are further facilitated.

Further, in the present embodiment, the resin constituting the fiber-reinforced resin material preferably comprises a resin having a basic structure. The resin having a basic structure can swell by coordinating hydrogen ions (protons) in an acidic solution in the first treatment of the first step described later. The swollen resin having a basic structure enables sufficient permeation of an oxidant in the second treatment described later, which accelerates dissolution of the resin in the treatment solution.

The basic structure of the resin is not particularly limited, and examples thereof include an amide bond, an imide bond, an azo group, a diazo group, a urea bond, a urethane bond, a peptide bond, an isocyanate group, an azide group, and chemical structures derived from or similar to these. The resin having a basic structure can comprise one or more of these. Among these, the method according to the present embodiment can be suitably used to swell and decompose a resin having a primary, secondary or tertiary amide bond as a basic structure.

The resin having a basic structure preferably comprises chemical bonds having basic properties in its main chain structure. Accordingly, in the first treatment of the first step, swelling can be further promoted by a reaction with a chemical structure having basic properties, and in the oxidation step described later, decomposition of the resin and subsequent dissolution in the oxidation treatment solution can be accelerated. Examples of the resin having a basic structure include amine-cured epoxy resins, urethane resins, polyimide resins, polyamide, melamine resins, aniline resins and urea resins. The resin can comprise one or more of these as the resin having a basic structure.

The resin having a basic structure may comprise a basic structure in its side chain. Examples of such a resin include those having a basic structure as described above in a side chain of various resin components described later.

The content of the resin having a basic structure in the resin in the fiber-reinforced resin material is not particularly limited, but may be, for example, 20 mass% or greater, preferably 50 mass% or greater, and more preferably 70 mass% or greater. Still more preferably, the resin is composed of a resin substantially having a basic structure, and most preferably, the resin is composed of a resin having a basic structure. Accordingly, removal of the resin and recovery of the reinforcing fibers from the fiber-reinforced resin material during the acid treatment step are further facilitated.

Further, the fiber-reinforced resin material itself may have a sheet shape, or may be in the form of cut chips. In particular, the method according to the present embodiment, which is capable of relatively efficiently removing the resin, can be suitably applied to sheet-shaped fiber-reinforced resin materials, from which it has been difficult to recover reinforcing fibers.

Further, the size of the fiber-reinforced resin material is not particularly limited. However, in consideration of maintaining the direction of the reinforcing fibers in the fiber-reinforced resin material, the length of each piece of the fiber-reinforced resin material may be, for example, 100 mm or greater, and preferably 500 mm or greater, and 3,000 mm or less. More specifically, as the fiber-reinforced resin material, for example, a fiber-reinforced resin material sheet having a laminate thickness of approximately 300 mm and a size of 1,000 mm × 500 mm can be used. In the fiber-reinforced resin material having a relatively large size as described above, the treatment solution tends not to readily permeate, making it difficult to remove the resin and recover the reinforcing fibers. However, the method according to the present embodiment, which is capable of relatively efficiently removing the resin, can also be applied to relatively large sized fiber-reinforced resin materials.

### 1.2. First Step

In the first step, the fiber-reinforced resin material is treated with a treatment solution to dissolve at least part of the resin in the treatment solution. Specifically, in the present embodiment, the first step comprises a first treatment (acid treatment) in which the fiber-reinforced resin material is treated with an acidic solution comprising an acid and a second treatment (oxidation treatment) in which the fiber-reinforced resin material is treated with an oxidation treatment solution comprising an oxidant to dissolve at least part of the resin of the fiber-reinforced resin material in the oxidation treatment solution.

### (i) First Treatment

In the first treatment, the prepared fiber-reinforced resin material is treated with an acidic solution comprising an acid. Due to the treatment of the fiber-reinforced resin material with an acidic solution comprising an acid, at least part of the acid-decomposable components contained in the resin of the fiber-reinforced resin material is decomposed, and dissolves in the acidic solution. Alternatively, at least part of the acid-soluble components dissolves in the acidic solution. This promotes permeation of the oxidation treatment solution into the resin in the second step described later, and more efficiently dissolve the resin in the oxidation treatment solution.

When the fiber-reinforced resin material comprises a resin having a basic structure, due to the treatment of the fiber-reinforced resin material with an acidic solution comprising an acid, hydrogen ions in the acidic solution are coordinated in the resin component having a basic structure to form a salt, resulting in swelling of the resin component having a basic structure and thus swelling of the resin itself. This promotes permeation of the oxidant into the resin in the second treatment described later, and accelerates decomposition and elution of the resin in the second treatment.

The acidic solution in this step comprises at least an acid and optionally a solvent. Examples of the acid include inorganic acids, organic acids, and mixtures thereof. Examples of the inorganic acids comprise sulfuric acid, hydrochloric acid and phosphoric acid, and these can be used alone or in combination of two or more. Examples of the phosphoric acid include orthophosphoric acid, metaphosphoric acid, hypophosphoric acid, phosphorous acid, hypophosphorous acid, pyrophosphoric acid, trimetaphosphoric acid, tetrametaphosphoric acid and pyrophosphorous acid. Examples of the organic acids include formic acid, acetic acid, citric acid, succinic acid and oxalic acid.

Among those described above, from the perspective of suitably swelling the resin component, the acid preferably comprises at least one selected from the group consisting of inorganic acids, especially sulfuric acid, hydrochloric acid, phosphoric acid and acetic acid.

Further, the acid dissociation constant pKa of the component having the highest molar concentration among the components included in the acid is not particularly limited, but is preferably 5.0 or less, and more preferably 1.5 or less. Due to the pKa of the component having the highest molar concentration among the components included in the acid being sufficiently low, hydrogen ions are easily released into the acidic solution, and as a result, the effect described above can be reliably achieved. When the component having the highest molar concentration among the components included in the acid has a plurality of acid dissociation constants, the acid dissociation constant at the first stage, that is, the lower acid dissociation constant, is preferably within the above range.

The concentration of the acid contained in the acidic solution is not particularly limited, but may be, for example, 0.5 mol/L or greater, preferably 1.0 mol/L or greater, and more preferably 3.5 mol/L or greater. Accordingly, hydrogen ions are easily released into the acidic solution, and as a result, the effect described above can be reliably achieved. The upper limit of the acid concentration is not limited as long as it can provide an acidic solution, and varies depending on the type of the acid.

Further, the acidic solution usually comprises a solvent. The solvent is not particularly limited as long as it can be mixed with the acid described above and is chemically stable to the acid, and may be, for example, water and/or various organic solvents.

Examples of the organic solvents include, but are not limited to, alcohol-based solvents, ether-based solvents, ketone-based solvents, aromatic hydrocarbons, halogenated aromatic hydrocarbons and halogenated aliphatic hydrocarbons, and these can be used alone or in combination of two or more.

Examples of the alcohol-based solvents include aliphatic alcohol-based solvents, aromatic alcohol-based solvents, glycol-based solvents and other polyhydric alcohols such as glycerin.

Examples of the aliphatic alcohol-based solvents include acyclic aliphatic alcohols such as 1-butanol, 2-butanol, 2-methyl-1-propanol, 2-methyl-2-propanol, 1-pentanol, 2-pentanol, 3-pentanol, 2-methyl-1-butanol, 2-methyl-2-butanol, 3-methyl-1-butanol, 3-methyl-2-butanol, 2,2-dimethyl-1-propanol, 1-hexanol, 2-hexanol, 3-hexanol, 2-ethylhexanol, 2-methyl-1-pentanol, 4-methyl-2-pentanol, 2-ethyl-1-butanol, 1-heptanol, 2-heptanol, 3-heptanol, dodecanol, methanol and ethanol; and alicyclic alcohols such as cyclohexanol, 1-methylcyclohexanol, 2-methylcyclohexanol, 3-methylcyclohexanol and 4-methylcyclohexanol.

Examples of the aromatic alcohol-based solvents include phenol, cresol, benzyl alcohol and phenoxyethanol.

Examples of the glycol-based solvents include ethylene glycol, ethylene glycol monomethyl ether, ethylene glycol monoethyl ether, ethylene glycol monopropyl ether, ethylene glycol monobutyl ether, diethylene glycol, diethylene glycol monomethyl ether, diethylene glycol monoethyl ether, diethylene glycol monopropyl ether, diethylene glycol monobutyl ether, triethylene glycol, triethylene glycol monomethyl ether, triethylene glycol monoethyl ether, tetra ethylene glycol, polyethylene glycol (molecular weight 200 to 400), 1,2-propanediol, 1,3-propanediol, 1,2-butanediol, 1,3-butanediol, 1,4-butanediol, 2,3-butanediol, 1,5-pentanediol and dipropylene glycol.

Examples of the ether-based solvents include aliphatic ethers such as dimethyl ether, diethyl ether, ethyl methyl ether, dipropyl ether, diisopropyl ether, dibutyl ether and dihexyl ether; cyclic ethers such as 1,3-dioxolane, 1,4-dioxane, tetrahydrofuran and furan; and aromatic-comprising ethers such as anisole, phenetole, diphenyl ether and benzofuran.

Examples of the ketone-based solvents include acetone, methyl ethyl ketone, 2-pentanone, 3-pentanone, 2-hexanone, methyl isobutyl ketone, 2-heptanone, 4-ptanone, diisobutyl ketone, cyclohexanone, methylcyclohexanone, phorone, isophorone, acetylacetone, acetophenone, diethylketone and diacetone alcohol.

Examples of the aromatic hydrocarbons include benzene, toluene and xylene.

Examples of the halogenated aromatic hydrocarbons include orthochlorophenol and orthodichlorobenzene.

Examples of the halogenated aliphatic hydrocarbons include chloroform and methylene chloride.

Among those described above, the solvent preferably comprises water in order to facilitate mixture with the acid and appropriately dissociate hydrogen ions in the acid. The solvent may be a mixed solvent of water and an organic solvent miscible with water. Examples of the organic solvent miscible with water include alcohol-based solvents and ketone-based solvents.

The content of the solvent contained in the acidic solution is not particularly limited, and may be the balance of other components such as the acid.

The fiber-reinforced resin material is subjected to treatment with the acidic solution as described above. The temperature of the acidic solution during treatment is not particularly limited, and may be, for example, 0°C or higher and 100°C or lower, and preferably 50°C or higher and 100°C or lower.

The time of treatment with the acidic solution is not particularly limited, and may be 5 minutes or more and 1,200 minutes or less, and preferably 10 minutes or more and 120 minutes or less after the target temperature is reached.

In addition, treatment with the acidic solution may be performed under normal pressure, reduced pressure or increased pressure. When the treatment with the acidic solution is performed under increased pressure, the pressure may be, for example, 0.11 MPa or more and 7.0 MPa or less, and especially 0.11 MPa or more and 2.0 MPa or less. In consideration of safety and economy, the treatment with the acidic solution is preferably performed under normal pressure.

The treatment of the fiber-reinforced resin material with the acidic solution is not particularly limited, and may be performed by immersing the fiber-reinforced resin material in the acidic solution, or may be performed by spraying the acidic solution to the fiber-reinforced resin material with a spray or the like, and any means capable of bringing the acidic solution into contact with the fiber-reinforced resin material can be used. Further, the acidic solution may be agitated during treatment with the acidic solution. In addition, the fiber-reinforced resin material may be secured by a fixture so that the fiber bundles of the fiber-reinforced resin material are maintained.

Further, in this step, the first treatment may be omitted.

### (ii) Second Treatment

In the second treatment, the fiber-reinforced resin material is treated with an oxidation treatment solution comprising an oxidant to dissolve at least part of the resin of the fiber-reinforced resin material in the oxidation treatment solution. The treatment solution in this step comprises at least an oxidant and optionally a polymerization inhibitor and a solvent.

The fiber-reinforced resin material treated with the acidic solution in the first treatment described above promotes permeation of the oxidant into the resin, and as a result, the resin is efficiently decomposed and eluted by the treatment with the oxidation treatment solution in the second treatment. In particular, when the resin comprises a resin having a basic structure, the resin swells due to the acid treatment, promoting permeation of the oxidant into the resin.

Examples of the oxidant include, but are not limited to, acids having oxidizing properties, such as nitric acid, hot concentrated sulfuric acid, a mixed acid of sulfuric acid and nitric acid, a mixed acid of nitric acid and hydrochloric acid (aqua regia), a mixed solution of hydrogen peroxide and sulfuric acid, perchloric acid, chloric acid, hypochlorous acid, chlorous acid, perbromic acid, bromic acid, hypobromous acid, bromous acid, periodic acid, iodic acid, hypoiodous acid and iodous acid, alkali (earth) metal salts thereof, oxygen-based oxidants, such as oxygen, ozone, hydrogen peroxide and acetone peroxide (reaction product of hydrogen peroxide and acetone), halogen-based oxidants, such as chlorine, chlorine dioxide, bromine, fluorine and iodine, and these can be used alone or in combination of two or more. Further, examples of the alkali metal elements include lithium, sodium, potassium, rubidium, cesium and francium, and examples of the alkali earth metals include calcium, strontium, barium and radium.

Among those described above, the oxidant preferably comprises an acid having oxidizing properties since it is relatively easy to handle and can stabilize the liquid properties of the oxidation treatment solution. In particular, from the viewpoint of the efficiency of decomposition of the resin, the oxidant more preferably comprises at least one selected from the group consisting of nitric acid, a mixed acid of sulfuric acid and nitric acid, a mixed acid of nitric acid and hydrochloric acid (aqua regia), and a mixed solution of hydrogen peroxide and sulfuric acid, and particularly preferably comprises nitric acid or a mixed solution of hydrogen peroxide and sulfuric acid.

The concentration of the oxidant in the oxidation treatment solution is not particularly limited, and can be appropriately set according to the amount of the resin in the fiber-reinforced resin material to be treated. However, when the oxidant is an acid having oxidizing properties, the concentration of the oxidant in the oxidation treatment solution may be, for example, 5 mass% or greater and 80 mass% or less, and preferably 20 mass% or greater and 50 mass% or less.

The oxidation treatment solution preferably comprises a polymerization inhibitor. Due to the oxidation treatment solution comprising a polymerization inhibitor in addition to an oxidant, it is possible to more efficiently decompose and dissolve the resin in the treatment solution. Although the details of the phenomenon that occurs during this treatment is not known, the inventors of the present invention speculate as follows.

First, an oxidant can generally cleave the molecular chains in the resin, reducing the molecular weight of the resin in the fiber-reinforced resin material. Then, hydroxyl groups and carboxy groups produced by the oxidation reaction and polar groups resulting from the oxidant are introduced into the resin, making the resin more soluble in the oxidation treatment solution. These cause the resin to dissolve in the treatment solution.

Meanwhile, the inventors of the present invention noticed that even after the treatment with the above-mentioned oxidation reaction, part of the resin still remains in the reinforcing fiber resin material. The inventors have diligently studied and found that, in the oxidation reaction of the resin by the oxidant, a repolymerization reaction may also occur in parallel with the above-mentioned decomposition reaction. The inventors found that the inclusion of a polymerization inhibitor together with an oxidant in the oxidation treatment solution can significantly increase the degree of dissolution of the resin compared to the case where no polymerization inhibitor is included.

The polymerization inhibitor is not particularly limited as long as it can suppress repolymerization of the decomposition products of the resin, and examples thereof include nitrites such as alkali metals or alkaline earth metal salts of nitrous acid, nitrite esters, hydroquinone, oxoquinone, 4-tert-butylpyrocatechol, tert-butylhydroquinone, 1,4-benzoquinone, dibutylhydroxytoluene, 1,1-diphenyl-2-picrylhydrazyl free radical, mequinol and phenothiazine, and these can be used alone or in combination of two or more. Examples of the alkali metals include sodium, potassium, cesium and rubidium. Examples of the alkaline earth metals include beryllium, magnesium, calcium, strontium and barium. Further, examples of the nitrite esters include methyl nitrite, ethyl nitrite, amyl nitrite, isoamyl nitrite, isobutyl nitrite, isopropyl nitrite, t-butyl nitrite, n-butyl nitrite and n-propyl nitrite.

Among those described above, the polymerization inhibitor preferably comprises one or more selected from the group consisting of nitrites and nitrite esters, and more preferably comprises one or more selected from the group consisting of sodium nitrite, potassium nitrite, ethyl nitrite and amyl nitrite. This makes it possible to more efficiently dissolve the resin in the oxidation treatment solution.

The concentration of the polymerization inhibitor in the oxidation treatment solution is not particularly limited, and can be appropriately set according to the amount of the resin in the fiber-reinforced resin material to be treated. However, for example, the concentration of the polymerization inhibitor in the treatment solution may be, for example, 0.010 mass% or greater and 20 mass% or less, and preferably 0.20 mass% or greater and 5.0 mass% or less. This makes it possible to sufficiently suppress the repolymerization reaction of the low molecular weight resin without inhibiting the oxidation reaction of the resin by the oxidant.

Further, the oxidation treatment solution usually contains a solvent. The solvent is not particularly limited as long as it is stable to the oxidant and polymerization inhibitor to be used and is miscible with these components, and for example, water and various organic solvents exemplified as the solvent for the acidic solution described above can be used alone or in combination of two or more.

In particular, the solvent contained in the oxidation treatment solution preferably comprises water or an organic solvent contained in the solvent for the acidic solution described above. When the acidic solution comprises a plurality of solvents, the oxidation treatment solution preferably comprises one or more of the plurality of solvents above. This more reliably prevents occurrence of undesired side reactions or undesired shrinkage of the swollen fiber-reinforced resin material when the oxidation treatment solution is brought into contact with the fiber-reinforced resin material.

Further, from the viewpoint of ease of handling and acceleration of the oxidation reaction by the oxidant, the oxidation treatment solution preferably comprises water or a mixed solvent of water and an organic solvent miscible with water, and more preferably comprises water.

The content of the solvent contained in the oxidation treatment solution is not particularly limited, and may be the balance of other components such as the oxidant.

Further, the oxidation treatment solution is preferably neutral or acidic, and is more preferably acidic. This prevents the fiber-reinforced resin material treated with the acidic solution from being neutralized when the treatment solution is brought into contact with the fiber-reinforced resin material, preventing undesirable solidification and deposition of the resin.

Specifically, the pH of the treatment solution at 25°C may be, for example, 5.0 or less, preferably 2.0 or less, and more preferably 1.5 or less.

The oxidation treatment solution may comprise an acid. This allows the pH of the oxidation treatment solution to be adjusted, and examples of the acid include the acids listed in the second treatment, and these can be used alone or in combination of two or more.

The fiber-reinforced resin material is treated with the oxidation treatment solution described above. The temperature of the treatment solution during treatment is not particularly limited, and may be, for example, 0°C or higher and 100°C or lower, and preferably 50°C or higher and 100°C or lower.

The time of treatment with the oxidation treatment solution is not particularly limited, and may be 5 minutes or more and 1,200 minutes or less, and preferably 10 minutes or more and 120 minutes or less after the target temperature is reached.

In addition, the treatment with the oxidation treatment solution may be performed under normal pressure, reduced pressure or increased pressure. When the treatment with the treatment solution is performed under increased pressure, the pressure may be, for example, 0.11 MPa or more and 7.0 MPa or less, and especially 0.11 MPa or more and 2.0 MPa or less. In consideration of safety and economy, the treatment with the oxidation treatment solution is preferably performed under normal pressure.

The treatment of the fiber-reinforced resin material with the oxidation treatment solution is not particularly limited, and may be performed by immersing the fiber-reinforced resin material in the oxidation treatment solution, or may be performed by spraying the oxidation treatment solution to the fiber-reinforced resin material with a spray or the like, and any means capable of bringing the oxidation treatment solution into contact with the fiber-reinforced resin material can be used. Further, the oxidation treatment solution may be agitated during treatment with the oxidation treatment solution. In addition, the fiber-reinforced resin material may be secured by a fixture so that the fiber bundles of the fiber-reinforced resin material are maintained.

### (iii) Washing Treatment

Next, washing is performed as necessary. Washing can be performed by exposing the fiber-reinforced resin material to a cleaning solution. Specifically, washing can be performed by replacing the oxidation treatment solution with a cleaning solution in the above second treatment. The temperature of the cleaning solution during washing and the washing time can be set as appropriate.

Examples of the cleaning solution include water and various organic solvents exemplified as the solvent for the acidic solution described above, and these can be used alone or in combination of two or more. Further, examples of the organic solvents include, in addition to the solvents described above, ester-based solvents and amide-based solvents.

Examples of the ester-based solvents include methyl formate, ethyl formate, propyl formate, butyl formate, isobutyl formate, pentyl formate, methyl acetate, ethyl acetate, propyl acetate, isopropyl acetate, butyl acetate, isobutyl acetate, pentyl acetate, isopentyl acetate, 3-methoxybutyl acetate, 2-ethylbutyl acetate, 2-ethylhexyl acetate, cyclohexyl acetate, benzyl acetate, methyl propionate, ethyl propionate, butyl propionate, isopentyl propionate, methyl lactate, ethyl lactate, butyl lactate, methyl butyrate, ethyl butyrate, butyl butyrate, isopentyl butyrate, isobutyl isobutyrate, ethyl isovalerate, isopentyl isovalerate, methyl benzoate, ethyl benzoate, propyl benzoate, butyl benzoate, γ-butyrolactone, diethyl oxalate, dibutyl oxalate, diethyl malonate, methyl salicylate, ethylene glycol diacetate, tributyl borate, trimethyl phosphate and triethyl phosphate.

Examples of the amide-based solvents include formamide, N-methylformamide, N,N-dimethylformamide, N,N-diethylformamide, acetamide, N-methylacetamide, N,N-dimethylacetamide, 2-pyrrolidone, N-methyl-2-pyrrolidone, caprolactam and carbamic acid ester.

The cleaning solution may comprise a basic substance. The basic substance can be used to neutralize and adjust the liquid properties so that a resin component remaining in the fiber-reinforced resin material and reaction products thereof can be removed. Accordingly, a fibrous material comprising reinforcing fibers can be obtained.

Examples of the basic substance include inorganic basic substances such as hydroxides, carbonates, hydrogen carbonates, sulfates, sulfites and nitrates of lithium, alkali metals and alkaline earth metals; and amine compounds such as dimethylamine and diethylamine, and these can be used alone or in combination of two or more. Examples of the alkali metals include sodium, potassium, cesium and rubidium. Examples of the alkaline earth metals include beryllium, magnesium, calcium, strontium and barium.

Each of the first treatment, second treatment and washing treatment described above can be performed multiple times as necessary. Further, the order of the treatments may be changed as necessary. For example, the first treatment and the second treatment may be repeated multiple times, and then the washing step may be performed. Alternatively, for example, the first treatment may be performed multiple times, then the second treatment may be performed, and then the washing treatment may be performed a required number of times. Alternatively, for example, the first treatment, the second treatment and the washing treatment may be performed in this order a required number of times.

In the present embodiment, the acidic solution in the first treatment and the oxidation treatment solution in the second treatment correspond to the treatment solution in the present invention.

### 1.3. Second Step

In the second step, the fiber-reinforced resin material is heated in a gas atmosphere at 150°C or higher. In the first step, at least part of the resin of the fiber-reinforced resin material is dissolved in the treatment solution. Further, in the first step, the resin contained in the fiber-reinforced resin material is reduced in molecular weight due to decomposition or the like, and the surface area of the resin exposed to the outside air is increased due to elusion of the resin itself. When the fiber-reinforced resin material in this state is heated in a gas atmosphere at 150°C or higher, the resin remaining in the fiber-reinforced resin material is easily decomposed and/or dissolved, resulting in recycled reinforcing fibers from which the resin has been sufficiently removed.

In general, to obtain recycled reinforcing fibers by a pyrolysis method, the resin is removed by treatment at a temperature of 500°C or higher. In such a case, the reinforcing fibers themselves present in the fiber-reinforced resin material may also be damaged by heat. In addition, when a pyrolysis method is performed to remove the resin, the resin such as curable resin is once cured by heat and then decomposed. Such curing of the resin rather inhibits its decomposition and thus its removal.

On the other hand, in the present embodiment, where at least part of the resin is decomposed in the first step, the resin is less likely to cure compared to the case where a simple pyrolysis method is used. Furthermore, since at least part of the resin is decomposed in the first step, the resin can be decomposed and removed even at relatively low temperatures, reducing heat damage to the reinforcing fibers.

The heating temperature in this step may be within the above-mentioned range, but is preferably 150°C or higher and 600°C or lower, more preferably 150°C or higher and 350°C or lower, and even more preferably 200°C or higher and 300°C or lower. This makes it possible to more reliably remove the resin while more reliably reducing heat damage to the resulting recycled reinforcing fibers.

The heating time is not particularly limited, and may be 30 minutes or more and 1,500 minutes or less, and preferably 60 minutes or more and 300 minutes or less after the target temperature is reached. This makes it possible to more reliably remove the resin while reducing heat damage to the resulting recycled reinforcing fibers.

Further, the gas present in the surrounding atmosphere in this step is not particularly limited, but may include, for example, an inert gas such as nitrogen or noble gas, air and/or water vapor. Among these, the gas present in the surrounding atmosphere preferably comprises air.

The heating treatment may be performed under normal pressure, reduced pressure or increased pressure. In consideration of safety and economy, the heating treatment is preferably performed under normal pressure.

In addition, the heating treatment may be performed while fixing the fiber-reinforced resin material as necessary. Accordingly, it is possible to dry the reinforcing fibers while maintaining the shape and orientation of the reinforcing fibers contained in the fiber-reinforced resin material.

Thus, recycled reinforcing fibers can be obtained. In the method of producing recycled reinforcing fibers according to the present embodiment, in the first step, at least part of the resin of the fiber-reinforced resin material is dissolved in the treatment solution. Further, in the first step, the resin contained in the fiber-reinforced resin material is reduced in molecular weight due to decomposition or the like, and the surface area of the resin exposed to the outside air is increased due to elusion of the resin itself. When the fiber-reinforced resin material in this state is heated in a gas atmosphere at 150°C or higher and 350°C or less, the resin remaining in the fiber-reinforced resin material is easily decomposed and/or dissolved, resulting in recycled reinforcing fibers from which the resin has been sufficiently removed.

Furthermore, the first step and the second step can be performed at relatively low temperatures, that is, under mild conditions, compared with conventional solvent method and pyrolysis method. This makes it possible to prevent damage to the resulting recycled reinforcing fibers and to significantly reduce the energy required to produce the recycled reinforcing fibers.

Furthermore, in the present embodiment, the first step comprises a first treatment in which the fiber-reinforced resin material is treated with an acidic solution comprising an acid and a second treatment in which the fiber-reinforced resin material is treated with the oxidation treatment solution comprising an oxidant to dissolve at least part of the resin of the fiber-reinforced resin material in the oxidation treatment solution.

Due to the treatment of the fiber-reinforced resin material with an acidic solution comprising an acid, at least part of the acid-decomposable components contained in the resin of the fiber-reinforced resin material is decomposed, and dissolves in the acidic solution. Alternatively, at least part of the acid-soluble components dissolves in the acidic solution. This promotes permeation of the oxidation treatment solution into the resin in the second step described later, and more efficiently dissolve the resin in the oxidation treatment solution.

Furthermore, according to the present embodiment, which is capable of efficiently removing the resin, it is not necessary to finely cut the fiber-reinforced resin material before dissolving the resin, unlike the conventional technique. That is, the method according to the present embodiment can be applied to relatively large sized fiber-reinforced resin materials to uniformly and efficiently remove the resin.

In addition, the resin dissolved in each step can also be recovered and recycled.

### 2. Second Embodiment

Next, a method of producing recycled reinforcing fibers according to a second embodiment of the present invention will be described. The following description will be given of a method of producing recycled reinforcing fibers according to a second embodiment of the present invention, focusing on the differences from the first embodiment described above, and the description of the same components will be omitted.

The method of producing recycled reinforcing fibers according to the present embodiment differs from the first embodiment in that, in the first step, the fiber-reinforced resin material is treated with a treatment solution comprising a solvent and optionally a catalyst to dissolve at least part of the resin of the fiber-reinforced resin material in the treatment solution. That is, in the first embodiment, an oxidation treatment solution comprising an oxidant is used as the main treatment solution, but in the present invention, the use of an oxidant is not necessarily required. Therefore, in the present embodiment, a treatment solution that can be used in the solvent method will be generally described, including an aspect of the first embodiment. Further, since the above-mentioned preparation step and second step are the same, only the first step will be described below.

First, according to the present embodiment, in the first step, the fiber-reinforced resin material is treated with a treatment solution comprising a solvent and optionally a catalyst to dissolve at least part of the resin of the fiber-reinforced resin material in the treatment solution.

The solvent is the main component of the treatment solution. The solvent is not particularly limited as long as it can dissolve the resin of the fiber-reinforced resin material or a reaction product in this step, and may be, for example, water and/or various organic solvents. Examples of the various organic solvents include the solvents exemplified in the first treatment of the first embodiment, and these can be used alone or in combination of two or more.

The content of the solvent contained in the treatment solution is not particularly limited, but may be, for example, 0.01 mass% or greater and 100 mass% or less, preferably 40 mass% or greater and 60 mass% or less, and more preferably 80 mass% or greater and 100 mass% or less.

Further, the treatment solution may comprise a catalyst. The catalyst is not particularly limited as long as it catalyzes the dissolution of the resin in the fiber-reinforced resin material, and examples thereof include acidic substances and basic substances. These substances can improve the solubility of the resin in a solvent, for example, by adding a hydrogen ion, a hydroxide ion, or the like to a functional group of the resin component, or by decomposing the resin. In particular, when the solvent comprises a protic solvent, especially water, the catalytic action of acidic substances and basic substances is further improved.

Examples of the acidic substance include inorganic acids, organic acids, salts thereof, and mixtures thereof. Examples of the inorganic acids include nitric acid, sulfuric acid, hydrochloric acid and phosphoric acid, and these can be used alone or in combination of two or more. Examples of the phosphate include orthophosphate, metaphosphate, hypophosphate, phosphite, hypophosphite, pyrophosphate, trimetaphosphate, tetrametaphosphate and pyrophosphite. Examples of the organic acids include formic acid, acetic acid, citric acid, succinic acid and oxalic acid.

Examples of the salts of inorganic acids or organic acids include salts of alkali metals (e.g., sodium, potassium, cesium, rubidium, and the like) and/or alkaline earth metals (e.g., beryllium, magnesium, calcium, strontium, barium, and the like) of the inorganic acids or organic acids described above.

Among those described above, inorganic acids, in particular, nitric acid, sulfuric acid, hydrochloric acid and phosphoric acid are preferred since they are easily available and tend to contribute to promotion of the dissolution of the resin.

Further, when the treatment solution comprises an acidic substance as a catalyst, the content of the acidic substance can be appropriately selected depending on the type of the acidic substance used, the type of the solvent in the treatment solution, and the resin in the target fiber-reinforced resin material. The content of the acidic substance in the treatment solution may be, for example, 0.01 mass% or greater and 100 mass% or less, and in particular 10 mass% or greater and 50 mass% or less.

Examples of the basic substance include inorganic basic substances such as hydroxides, carbonates, hydrogen carbonates, sulfates, sulfites and nitrates of lithium, alkali metals and alkaline earth metals; and amine compounds such as dimethylamine and diethylamine, and these can be used alone or in combination of two or more. Examples of the alkali metals include sodium, potassium, cesium and rubidium. Examples of the alkaline earth metals include beryllium, magnesium, calcium, strontium and barium.

Among those described above, hydroxides, carbonates and hydrogen carbonates of alkali metals are preferred since they are easily available and tend to contribute to promotion of the dissolution of the resin component. More specifically, the basic substance preferably comprises one or more selected from the group consisting of sodium hydroxide, potassium hydroxide, sodium hydrogen carbonate, sodium carbonate, potassium hydrogen carbonate and potassium carbonate.

Further, when the treatment solution comprises a basic substance as a catalyst, the content of the basic substance can be appropriately selected depending on the type of the basic substance used, the type of the solvent in the treatment solution, and the resin component in the target fiber-reinforced resin material. The content of the basic substance in the treatment solution 200 may be, for example, 0.01 mass% or greater and 100 mass% or less, and in particular 10 mass% or greater and 50 mass% or less.

The temperature of the treatment solution during treatment is not particularly limited and varies depending on the type of the treatment solution, and may be, for example, 30°C or higher and 300°C or lower, and preferably 50°C or higher and 100°C or lower.

The time of treatment with the treatment solution is not particularly limited, and may be 1 minute or more and 1,440 minutes or less, and preferably 10 minutes or more and 60 minutes or less after the target temperature is reached.

In addition, the treatment with the treatment solution may be performed under normal pressure, reduced pressure or increased pressure. When the treatment with the treatment solution is performed under increased pressure, the pressure may be, for example, 0.11 MPa or more and 7.0 MPa or less, and especially 0.11 MPa or more and 2.0 MPa or less. In consideration of safety and economy, the treatment with the treatment solution is preferably performed under normal pressure.

The treatment of the fiber-reinforced resin material with the treatment solution is not particularly limited, and may be performed by immersing the fiber-reinforced resin material in the treatment solution, or may be performed by spraying the treatment solution to the fiber-reinforced resin material with a spray or the like, and any means capable of bringing the treatment solution into contact with the fiber-reinforced resin material can be used. Further, the treatment solution may be agitated during treatment with the treatment solution. In addition, the fiber-reinforced resin material may be secured by a fixture so that the fiber bundles of the fiber-reinforced resin material are maintained.

After treating the fiber-reinforced resin material with the treatment solution as the first step described above, a washing treatment as described in the first embodiment may be performed.

Further, the above treatment of the fiber-reinforced resin material with the treatment solution may be performed multiple times. In this case, the treatment solutions used for each treatment may have different compositions. In addition, a washing treatment as described in the first embodiment may be performed between each treatment.

The fiber-reinforced resin material that has been subjected to the treatment with the treatment solution as the first step described above is subjected to the second step, as in the first embodiment, to obtain recycled reinforcing fibers.

In the second embodiment described above, also, at least part of the resin of the fiber-reinforced resin material is dissolved in the treatment solution. Further, in the first step, the resin contained in the fiber-reinforced resin material is reduced in molecular weight due to decomposition or the like, and the surface area of the resin exposed to the outside air is increased due to elusion of the resin itself. When the fiber-reinforced resin material in this state is heated in a gas atmosphere at 150°C or higher, the resin remaining in the fiber-reinforced resin material is easily decomposed and/or dissolved, resulting in recycled reinforcing fibers from which the resin has been sufficiently removed.

Furthermore, as in the first embodiment, the first step and the second step in the present embodiment can be performed at relatively low temperatures, that is, under mild conditions, compared with conventional solvent method and pyrolysis method.

### Examples

The present invention will be described in more detail using the examples, but the present invention is not limited to these examples.

### 1. Production of Recycled Reinforcing Fibers

### (Example 1)

### (1) Preparation Step

First, a carbon fiber-reinforced resin material was prepared as a sample. The carbon fiber resin material used was a sheet with a length of approximately 30 cm, a width of 5 cm and a thickness of approximately 1 mm. Further, the resin constituting the carbon fiber-reinforced resin material was an amine-cured epoxy resin.

### (2) First Step

### (i) First Treatment (Acid Treatment)

Next, the carbon fiber-reinforced resin material was immersed for 1 hour in a 40 wt% (5.3 mol/L) sulfuric acid aqueous solution that has been heated to 80°C. During the immersion, the temperature of the sulfuric acid aqueous solution was maintained at 80°C.

### (ii) Second Treatment (Oxidation Treatment)

Next, 0.5 mass% of sodium nitrite was added to a 40 mass% (8.0 mol/L) nitric acid aqueous solution to obtain an oxidation treatment solution. The concentration of the nitric acid in the oxidation treatment solution was 39.8 mass% and the concentration of the sodium nitrite was 0.50 mass%. The carbon fiber-reinforced resin material was immersed for 60 minutes in the treatment solution that has been heated to 80°C. During the immersion, the temperature of the oxidation treatment solution was maintained at 80°C.

### (iii) Washing Treatment

Next, the reaction product was neutralized with a 10 mass% sodium hydrogen carbonate aqueous solution, and then the fibrous material (carbon fibers) obtained from the carbon fiber-reinforced resin material was washed with purified water.

### (3) Second Step (Heating Step)

Next, the fibrous material obtained after the washing was heated at 350°C for 1 hour to obtain recycled reinforcing fibers according to Example 1.

### (Example 2)

Recycled reinforcing fibers according to Example 2 were obtained in the same manner as in Example 1, except that sodium nitrite was not added to the oxidation treatment solution in the second treatment.

### (Example 3)

Recycled reinforcing fibers according to Example 3 were obtained in the same manner as in Example 2, except that neutralization of the reaction product with a 10 mass% sodium hydrogen carbonate aqueous solution in the washing step was omitted.

### (Example 4)

Recycled reinforcing fibers according to Example 4 were obtained in the same manner as in Example 3, except that the acid treatment step was omitted.

### (Comparative Example 1)

Recycled reinforcing fibers according to Comparative Example 1 were obtained in the same manner as in Example 2, except that a drying step was performed instead of the second step. In the drying step, the fibrous material obtained after the washing was heated at 110°C for 1 hour.

### (Comparative Example 2)

Recycled reinforcing fibers according to Comparative Example 2 were obtained in the same manner as in Comparative Example 1, except that neutralization of the reaction product with a 10 mass% sodium hydrogen carbonate aqueous solution in the washing step was omitted.

### (Comparative Example 3)

Recycled reinforcing fibers according to Comparative Example 3 were obtained in the same manner as in Comparative Example 2, except that the acid treatment step was omitted.

### 2. Evaluation of Recycled Reinforcing Fibers

The obtained recycled carbon fibers according to Examples 1 to 4 and Comparative Examples 1 to 3 and virgin carbon fibers used in the carbon fiber-reinforced resin material as a reference example were examined for the amount of residual resin by thermogravimetric analysis (TGA).

Specifically, first, the recycled carbon fibers according to Examples 1 to 4 and Comparative Examples 1 to 3 were heated at a temperature increase rate of 10°C/min while applying nitrogen at a flow rate of 200 ml/min, and then held at 200°C for 15 minutes to allow the weight change of the samples due to convection to subside. Then, the temperature was increased from 200°C to 600°C at a temperature increase rate of 10°C/min and a decrease in weight of the recycled carbon fibers during this period was measured. The amount of resin in the untreated carbon fiber reinforcement resin material was 50% by volume content, and was approximately 37 mass% to 43 mass% when the specific gravity of the epoxy resin was 1.1 g/cm³ to 1.4 g/cm³. Table 1 shows the results with the experimental conditions.

### [Table 1]

**Table 1**

| | First step | | | Second step/ treatment temperature in drying step (°C) | Weight loss rate by TGA (%) |
|---|---|---|---|---|---|
| | First treatment | Second treatment (addition of NaNO₂) | Washing treatment (neutralization with NaHCO₃) | | |
| Ex. 1 | Yes | Yes | Yes | 250 | 5.1 |
| Ex. 2 | Yes | No | Yes | 250 | 5.5 |
| Ex. 3 | Yes | No | No | 250 | 10.3 |
| Ex. 4 | No | No | No | 250 | 13.7 |
| Comp. Ex. 1 | Yes | No | Yes | 110 | 8.1 |
| Comp. Ex. 2 | Yes | No | No | 110 | 15.8 |
| Comp. Ex. 3 | No | No | No | 110 | 21.7 |
| Ref. Ex. | - | - | - | - | 3.2 |

As shown in Table 1, the resin was found to be efficiently removed from the carbon fiber-reinforced resin material in Examples 1 to 4. Specifically, the amount of residual resin in the recycled carbon fibers according to Examples 1 and 2 was significantly smaller than that according to Comparative Example 1, the amount of residual resin in the recycled carbon fibers according to Example 3 was significantly smaller than that according to Comparative Example 2, and the amount of residual resin in the recycled carbon fibers according to Example 4 was significantly smaller than that according to Comparative Example 3. This indicates the resin can be efficiently removed from the carbon fiber-reinforced resin material by sequentially performing the first step, which is a solution treatment, and the second step, which is a heating treatment. In particular, it was observed that the weight loss rates in Examples 1 and 2 were each close to the weight loss rate in the reference example performed with virgin carbon fibers, indicating that most of the resin was removed.

Although the preferred embodiments of the present invention have been described in detail, the present invention is not limited to these examples. It is obvious that a person skilled in the art can conceive of various alterations or modifications within the scope of technical idea recited in the claims, and these should be construed as being within the technical scope of the present invention.

## Claims

1. A method of producing recycled reinforcing fibers, the method comprising:
a first step of treating a fiber-reinforced resin material comprising a resin and reinforcing fibers with a treatment solution to dissolve at least part of the resin of the fiber-reinforced resin material in the treatment solution; and
a second step of heating the fiber-reinforced resin material in a gas atmosphere at 150°C or higher.

2. The method of producing recycled reinforcing fibers according to claim 1, wherein
the first step comprises treating the fiber-reinforced resin material with an oxidation treatment solution comprising an oxidant to dissolve at least part of the resin of the fiber-reinforced resin material in the oxidation treatment solution.

3. The method of producing recycled reinforcing fibers according to claim 1, wherein
the first step comprises a first treatment in which the fiber-reinforced resin material is treated with an acidic solution comprising an acid and a second treatment in which the fiber-reinforced resin material is treated with an oxidation treatment solution comprising an oxidant to dissolve at least part of the resin of the fiber-reinforced resin material in the oxidation treatment solution.

4. The method of producing recycled reinforcing fibers according to claim 2 or 3, wherein
the oxidant comprises an acid having oxidizing properties.

5. The method of producing recycled reinforcing fibers according to claim 4, wherein
the acid having oxidizing properties comprises at least one selected from the group consisting of nitric acid, a mixed acid of sulfuric acid and nitric acid, a mixed acid of nitric acid and hydrochloric acid (aqua regia), and a mixed solution of hydrogen peroxide and sulfuric acid.

6. The method of producing recycled reinforcing fibers according to claim 2 or 3, wherein
the oxidation treatment solution further comprises a polymerization inhibitor.

7. The method of producing recycled reinforcing fibers according to claim 6, wherein
the polymerization inhibitor comprises at least one selected from the group consisting of nitrites and nitrite esters.

8. The method of producing recycled reinforcing fibers according to claim 3, wherein
the acid comprises at least one selected from the group consisting of sulfuric acid, hydrochloric acid, phosphoric acid and acetic acid.

9. The method of producing recycled reinforcing fibers according to claim 3, wherein
the acid in the acidic solution has a concentration of 0.5 mol/L or greater.

10. The method of producing recycled reinforcing fibers according to claim 1, wherein
in the second step, the fiber-reinforced resin material is heated in a gas atmosphere at 150°C or higher and 350°C or lower.

11. The method of producing recycled reinforcing fibers according to claim 1, wherein
in the second step, heating is performed for 60 minutes or more and 300 minutes or less.

12. The method of producing recycled reinforcing fibers according to claim 2 or 3, wherein
the resin comprises an epoxy resin.

13. The method of producing recycled reinforcing fibers according to claim 3, wherein
the resin comprises an amine-cured epoxy resin.

14. The method of producing recycled reinforcing fibers according to claim 1, wherein
the reinforcing fibers comprise carbon fibers.
